# EUROPÄISCHE PATENTANMELDUNG

(11) **EP 1 972 942 A1**
(43) Veröffentlichungstag der Anmeldung: **24.09.2008**
(21) Anmeldenummer: 08004678.2
(22) Anmeldetag: 13.03.2008
(51) Int. Cl.: G01N 35/00, G06K 19/00

(54) **Verfahren zur Verhinderung des mehrfachen Gebrauchs von Einmalartikeln in Analysegeräten**

(30) Priorität: 21.03.2007 DE 102007014083
(71) Anmelder: Dade Behring Marburg GmbH, 35041 Marburg (DE)
(72) Erfinder: Zander, Norbert, Dr., 35039 Marburg (DE)

(57) **Zusammenfassung**

Die Erfindung liegt auf dem Gebiet der automatischen Analysegeräte und betrifft ein Verfahren zur Vehinderung des mehrfachen Gebrauchs von Einmalartikeln in Analysegeräten.

## Beschreibung

Die Erfindung liegt auf dem Gebiet der automatischen Analysegeräte und betrifft ein Verfahren zur Vehinderung des mehrfachen Gebrauchs von Einmalartikeln in Analysegeräten.

Automatische Analysegeräte ermöglichen im wesentlichen die automatische Durchführung eines Verfahrens zur qualitativen oder quantitativen Bestimmung eines Analyten in einer Probe. Viele dieser Geräte sind in der Lage, verschiedene Verfahren gleichzeitig oder nacheinander abzuarbeiten. Moderne Geräte verfügen dazu über verschiedene Komponenten zur Durchführung einzelner Verfahrensschritte, wie z. B. Vorrichtungen zur Aufnahme und Lagerung von Gefäßen, die die zu untersuchenden Proben enthalten, sowie Vorrichtungen zur Entnahme von Probenaliquots und zum Transfer dieser Aliquots in ein Reaktionsgefäß. Diese Geräte verfügen üblicherweise auch über Vorrichtungen zur Aufnahme und Lagerung von Reagenzgefäßen, die die notwendigen Reagenzien enthalten sowie Vorrichtungen zur Entnahme eines Reagenzvolumens und zum Transfer dieses Reagenzvolumens in ein Reaktionsgefäß. Nach dem Mischen der Probe mit dem Reagenz oder den Reagenzien im Reagenzgefäß wird dann üblicherweise ein physikalisches Signal gemessen, das mit der Qualität oder Quantität des Analyten in der Probe korreliert. Je nach Art des physikalischen Signals verfügt ein Analysegerät über passende Messeinrichtungen, wie z. B. Photometer, pH-Meter, Dosimeter, Luminometer, Fluorimeter oder ähnliches.

Viele automatische Analysegeräte verfügen über diverse Transportvorrichtungen, wie z. B. rotierbare Teller, auf welchen die verschiedenen Reagenzien angeordnet sind, oder lineare Fördereinrichtungen, die z. B. die Reaktionsgefäße von einer ersten Position, in welcher die Probe aliquotiert wird, in eine zweite Position befördern, in welcher das Reagenz zugegeben wird, und dann in eine dritte Position, in welcher die Messung vorgenommen wird. Der reibungslose Ablauf all dieser Verfahrensschritte wird normalerweise von speziell entwickelter Software gesteuert. Nach Beendigung des Testverfahrens werden die verwendeten Reaktionsgefäße häufig in einem Abfallbehältnis gesammelt, das schließlich von einer Bedienperson entleert werden kann.

Solche Geräte verfügen üblicherweise ausserdem über Vorrichtungen, die die Identifizierung der Proben und die Zuordnung der Analysenergebnisse zu der jeweiligen Probe ermöglichen. Häufig werden dazu Strichcode-Markierungen verwendet, die auf die Außenseite eines jeden Probengefäßes aufgebracht werden und mittels eines Strichcode-Lesegerätes gelesen werden.

Viele Hersteller automatischer Analysegeräte empfehlen die ausschließliche Verwendung spezieller Reaktionsgefäße. Insbesondere wenn die optische Eigenschaft eines Reaktionsansatzes analysiert werden soll oder wenn empfindliche biochemische Testverfahren durchgeführt werden sollen, muss ausgeschlossen werden, dass die Beschaffenheit der Reaktionsgefäße das Testverfahren nachteilig beeinflusst.

Beispiele für Reaktionsgefäße, deren Beschaffenheit ausschlaggebend ist für die Qualität des Verfahrens, in welchem sie eingesetzt werden, sind z. B. transparente Messzellen, wie Küvetten, Küvettenrotoren oder Mikrotitrationsplatten, die in einem optischen Detektionsverfahren eingesetzt werden. Testverfahren zur Bestimmung klinisch relevanter Parameter, z. B. zur Diagnose von Gerinnungsparametern, werden häufig mit Hilfe photometrischer Detektionssysteme ausgewertet. Im klinischen Labor kommen hauptsächlich vollautomatische Analysegeräte zum Einsatz, die nicht nur eine automatische Abarbeitung der Testverfahren, sondern auch die Bestimmung standardisierter Testergebnisse ermöglichen. Um zu gewährleisten, dass die automatisierten Verfahren zuverlässige Testergebnisse liefern, ist es notwendig, dass alle Test-relevanten Einzelkomponenten spezifische, vom Hersteller vorgegebene Anforderungen erfüllen bzw. sich in dem Zustand befinden, der für den Gebrauch unbedingt erforderlich ist. Dies betrifft unter anderem auch die verwendeten Reaktionsgefäße bzw. Messzellen, wie z. B. Küvetten, Küvettenrotoren oder Mikrotitrationsplatten, in welchen sich die analytischen Proben befinden, deren optische Eigenschaft bestimmt werden soll. Die vom Hersteller empfohlenen Reaktionsgefäße verfügen in der Regel nicht nur über spezifische konstruktive Eigenschaften, wie Form, Größe, Schichtdicke u. s. w., sondern bestehen üblicherweise aus einem Material, das im verwendeten Spektralbereich keine oder nur eine geringe Absorption zeigt. Gängige Reaktionsgefäße bestehen im Allgemeinen aus Kunststoff, insbesondere aus einem Kunststoff aus der Gruppe Polypropylen, Polystyrol, Polyethylen und Polyethylenterephthalat. Bei der Verwendung von Plagiaten von Reaktionsgefäßen, die dem Anwender möglicherweise noch nicht einmal bewusst ist, besteht die Gefahr, dass es durch Unterschiede in der Materialbeschaffenheit zu starken Abweichungen oder Fehlern bei der Messung der z. B. Trübung oder des Streulichts kommen kann. Ein weiteres Risiko stellen Reaktionsgefäße dar, die aufgrund ihrer Materialeigenschaften Wechselwirkungen mit dem zu bestimmenden Analyten, der Probe oder dem Reaktionsansatz eingehen. Am Beispiel von gerinnungsdiagnostischen Verfahren wird diese Problematik besonders deutlich: ist die Oberfläche des Reaktionsgefäßes oder der Messzelle, die mit dem Reaktionsansatz in Kontakt kommt, so beschaffen, dass eine unkontrollierte Aktivierung der Gerinnung erfolgt, kann keine zuverlässige Bestimmung der Gerinnungsreaktion erfolgen. Dieselbe Gefahr besteht bei der mehrfachen Verwendung von sogenannten Einmalküvetten, also Reaktionsgefäßen, die vom Hersteller für den einmaligen Gebrauch vorgesehen sind. Verunreinigungen, die infolge unzureichender Reinigung nach dem Erstgebrauch zurückbleiben, können ebenfalls zu Abweichungen oder Messfehlern führen. Letztendlich können fehlerhafte Messergebnisse, die infolge der Verwendung ungeeigneter oder verunreinigter Reaktionsgefäße verursacht werden, zu Fehldiagnosen führen, die im ungünstigsten Falle schwerwiegende gesundheitliche Folgen für die betroffenen Patienten haben können.

Der vorliegenden Erfindung lag daher die Aufgabe zugrunde, ein Verfahren für ein automatisches Analysegerät bereit zu stellen, das einerseits die Identifizierung eines Einmalartikels ermöglicht, der für den Gebrauch in dem automatischen Analysegerät vorgesehen ist, und das andererseits sicherstellt, dass dieser Einmalartikel auch nur ein einziges Mal und nicht mehrfach zu seinem Bestimmungszweck verwendet wird.

Die Aufgabe wird dadurch gelöst, dass der Einmalartikel, der mit einer detektierbaren Markierung versehen ist, vor seinem zweckgemäßen Gebrauch identifiziert wird und, sofern er aufgrund seiner Markierung als zulässig erkannt worden ist, bevorzugterweise nach seinem zweckgemäßen Gebrauch so behandelt wird, dass die ursprünglich detektierbare Markierung unleserlich gemacht wird.

Die vorliegende Erfindung betrifft demnach ein Verfahren zur Vehinderung des mehrfachen Gebrauchs eines Einmalartikels in einem automatischen Analysegerät, wobei der Einmalartikel mit einer detektierbaren Markierung versehen ist, die die Identifizierung bzw. die Überprüfung der Authentizität des Einmalartikels ermöglicht. Zur Identifizierung des Einmalartikels wird in dem erfindungsgemäßen Verfahren die detektierbare Markierung des Einmalartikels mittels einer geeigneten Detektionsvorrichtung erfasst, und das detektierte Signal wird mit vorab gespeicherter Information verglichen. Sofern eine Übereinstimmung des detektierten Signals mit der gespeicherten Information festgestellt wird, d. h. sofern die Markierung den Einmalartikel als zulässig kennzeichnet, kann der Einmalartikel gemäß seinem Bestimmungszweck verwendet werden, z. B. als Reaktionsgefäß. Für den Fall, dass keine Übereinstimmung des detektierten Signals mit der gespeicherten Information festgestellt wird und der Einmalartikel als nicht-zulässig erkannt wird, wird durch geeignete Maßnahmen, wie z. B. durch Aussortieren, sichergestellt, dass der Einmalartikel nicht verwendet wird. Um zu verhindern, dass ein als zulässig erkannter Einmalartikel mehrfach verwendet wird, wird die detektierbare Markierung des Einmalartikels geändert, entfernt oder zerstört, so dass die den Einmalartikel kennzeichnende Markierung für eine Detektionsvorrichtung unlesbar, d. h. nicht detektierbar ist. Die Entfernung oder Zerstörung der detektierbaren Markierung erfolgt nachdem die detektierbare Markierung des Einmalartikels erfasst und mit der vorab gespeicherten Information verglichen wurde. Bevorzugterweise erfolgt die Entfernung oder Zerstörung der detektierbaren Markierung nach der Verwendung des Einmalartikels zu seinem Bestimmungszweck.

Als Markierung kommt jede detektierbare Eigenschaft in Frage, die mittels einer Detektionsvorrichtung detektiert werden kann und die -möglichst irreversibel- entfernt oder zerstört werden kann.

Eine Ausführungsform der vorliegenden Erfindung betrifft ein Verfahren zur Vehinderung des mehrfachen Gebrauchs eines Einmalartikels in einem automatischen Analysegerät, wobei der Einmalartikel mit einem Strichcode (auch Barcode oder Balkencode) als optoelektronisch detektierbarer Markierung versehen ist. Der Einmalartikel kann mit einem beliebigen Strichcodetypen (1-D-, 2-D-, oder 3-D-Code) markiert sein, welcher beispielsweise direkt auf den Einmalartikel gedruckt sein kann oder in Form eines bedruckten Klebetiketts mit dem Einmalartikel verbunden sein kann. Die Detektion des Strichcodes erfolgt mittels eines optisch arbeitenden Datenerfassungsgerätes. Je nach Strichcodetyp erfolgt die Detektion z. B. mittels eines Scanners, beispielweise auf Basis eines lichtempfindlichen Halbleiterdetektors (CCD-Scanner) oder im Falle eines 3-D-Codes, bei dem Farbe die dritte Dimension darstellt, mittels einer Kamera.

Um den Strichcode des Einmalartikels unleserlich zu machen, kann z. B. eine farbige Schicht aufgebracht werden, die den Strichcode so abdeckt, dass der Hell-Dunkel Kontrast für ein Lesen des Strichcodes nicht mehr ausreicht. Das Aufbringen dieser zusätzlichen farbigen Schicht kann beispielsweise durch eine Tintenstrahldruckvorrichtung erfolgen. Ist der Strichcode in Form eines bedruckten Klebetiketts mit dem Einmalartikel verbunden, kann das Unleserlichmachen auch durch eine mechanische Entfernung oder Zerstörung des Etiketts erfolgen. Dies kann z. B. durch Abkratzen oder Zerkratzen des Etiketts etwa durch einen Metallspitze erfolgen, die mehrfach über den Strichcode geführt wird.

Eine weitere Ausführungsform der vorliegenden Erfindung betrifft ein Verfahren zur Vehinderung des mehrfachen Gebrauchs eines Einmalartikels in einem automatischen Analysegerät, wobei der Einmalartikel mit mindestens einem Farbstoff als detektierbarer Markierung versehen ist, welcher anhand seines Absorptions- oder Reflexionsspektrum detektiert werden kann. Dazu kann der Einmalartikel an sich mit einem Farbstoff oder einer Kombination von Farbstoffen eingefärbt sein oder die Farbmarkierung kann in Form eines farbigen Klebetiketts mit dem Einmalartikel verbunden sein. Die Detektion der Farbmarkierung erfolgt bevorzugterweise mit Hilfe eines Photometers, das die von der Wellenlänge eines eingestrahlten Lichtstrahls abhängige Extinktion oder Reflexion misst.

Um die Farbmarkierung des Einmalartikels unleserlich zu machen, kann z. B. eine zusätzliche farbige Schicht aufgebracht werden, die die ursprüngliche Farbmarkierung so abdeckt, dass die von der Wellenlänge eines eingestrahlten Lichtstrahls abhängige Extinktion oder Reflexion nicht mehr mit dem Absorptions- oder Reflexionsspektrum der ursprünglichen Farbmarkierung übereinstimmt. Wird z. B. eine transparente Kunststoffküvette durch ein Photometer bei einer Wellenlänge λ₁ geprüft, wird die Extinktion E₁ erwartet. Die Küvette wird akzeptiert, wenn der Messwert im Wertebereich von E₁-ΔE bis E₁+ΔE liegt, wobei ΔE einer akzeptablen Abweichung entspricht. Nach Gebrauch der Küvette wird eine zusätzliche Pigmentschicht aufgebracht, die bei der Wellenlänge λ₁ eine zusätzliche Extinktion von >2 ΔE erzeugt. Bei erneuter Prüfung ergäbe sich eine Gesamtextinktion von >(E₁+2 ΔE); diese läge außerhalb des akzeptablen Wertebereichs, so dass die Küvette für einen nochmaligen Gebrauch abgelehnt werden würde. Wird z. B. eine Küvette, die durch ein farbiges, lichtundurchlässiges Klebetikett markiert ist, geprüft, indem Licht einer bestimmten Intensität auf das Etikett gestrahlt wird und das reflektierte Licht von einem Sensor gemessen wird, wird für das reflektierte Licht ein bestimmter Sollwert erwartet, wie z. B. 30% der Intensität des eingestrahlten Lichts. Die Küvette wird akzeptiert, wenn die gemessene Reflexion in einem vorbestimmten Akzeptanzbereich, z. B. zwischen 20% und 40% liegt. Nach Gebrauch der Küvette wird eine zusätzliche Pigmentschicht auf das farbige Etikett aufgebracht, die das Reflexionsverhalten so verändert, dass die Reflexion außerhalb des Akzeptanzbereichs liegt. Bei erneuter Prüfung ergäbe sich also eine nicht-akzeptable Reflexion, so dass die Küvette für eine Zweitbenutzung abgelehnt werden würde.

Das Aufbringen dieser zusätzlichen farbigen Schicht kann beispielsweise durch eine Tintenstrahldruckvorrichtung erfolgen. Ist die Farbmarkierung in Form eines bedruckten Klebetiketts mit dem Einmalartikel verbunden, kann das Unleserlichmachen auch durch eine mechanische Entfernung oder Zerstörung des Etiketts erfolgen. Dies kann z. B. durch Abkratzen oder Zerkratzen der Markierung etwa durch einen Metallspitze erfolgen, die mehrfach über die Farbmarkierung geführt wird.

Eine weitere Ausführungsform der vorliegenden Erfindung betrifft ein Verfahren zur Vehinderung des mehrfachen Gebrauchs eines Einmalartikels in einem automatischen Analysegerät, wobei der Einmalartikel mit einem Radiofrequenz-Transponder, der aus einem Mikrochip mit gespeicherter Information und einer Antenne besteht, als detektierbarer Markierung versehen ist (auch Radio Frequency Identification oder RFID). Die auf dem Mikrochip gespeicherte Information wird über die Antenne als Radiostrahlung abgestrahlt. Die Detektion der Radiostrahlung erfolgt bevorzugterweise mit Hilfe mittels eines Lesegeräts durch induktive oder kapazitive Kopplung. Um die auf einem Mikrochip gespeicherte Information für eine geeignete Detektionsvorrichtung unleserlich zu machen, kann z. B. die Antenne des Radiofrequenztransponders mechanisch zerstört oder vom Mikrochip mechanisch getrennt werden, indem z. B. eine metallische Spitze oder Klinge über die Leitungsbahn, die Antenne und Mikrochip verbindet, geführt wird.

Ein weiterer Gegenstand der vorliegenden Erfindung ist ein Gerät zur automatischen Durchführung eines Verfahrens zur qualitativen oder quantitativen Bestimmung eines Analyten, das so ausgestattet ist, das es sich auch zur Durchführung des erfindungsgemäßen Verfahrens zur Verhinderung des mehrfachen Gebrauchs eines Einmalartikels eignet. Ein erfindungsgemäßes Gerät enthält dazu eine Vorrichtung zur Detektion einer detektierbaren Markierung eines Einmalartikels und eine Vorrichtung zum Ändern, Entfernen oder Zerstören der detektierbaren Markierung des Einmalartikels. Die Detektionsvorrichtung kann z. B. ein Photometer, ein Strichcode-Scanner oder ähnliches sein. Die Vorrichtung zum Ändern, Entfernen oder Zerstören der detektierbaren Markierung des Einmalartikels kann z. B. eine Tintenstrahldruckvorrichtung sein oder eine bewegliche oder stationäre Vorrichtung, wie z. B. ein Arm, an dessen distalem Ende eine scharfe, bevorzugt metallische Spitze oder Klinge angebracht ist, die mechanisch auf die detektierbare Markierung des Einmalartikels einwirkt und diese so unleserlich macht. Die mechanische Einwirkung kann entweder durch Bewegung der Vorrichtung erfolgen oder dadurch, dass der Einmalartikel an der stationären Vorrichtung so vorbeigeführt wird, dass ein für das Entfernen oder Zerstören ausreichender Kontakt zustande kommt.

Um die Erfindung zu veranschaulichen, wird im Folgenden das erfindungsgemäße Verfahren am Beispiel einer Strichcode-markierten Kunststoffküvette beschrieben:

Auf eine Kunststoffküvette, die einmalig in einem automatischen Gerinnungsmessgerät verwendet werden soll, wird vom Hersteller am oberen Rand der Küvette ein Strichcode aufgedruckt, welcher Informationen über die Chargennummer und die Verwendbarkeitsdauer der Küvette enthält. In dem Gerinnungsmessgerät sind akzeptable Chargennummern von Küvetten und deren Verwendbarkeitsdauer elektronisch auf einem Speichermedium gespeichert. Die Küvette wird von einer Bedienperson in das Küvettenlager des Gerinnungsmessgerätes eingebracht. Über eine automatische Transportvorrichtung wird die Küvette aus dem Küvettenlager entnommen und an eine erste Position transportiert, an welcher ein Strichcode-Scanner so angebracht ist, dass er den Strichcode am oberen Rand der Küvette lesen kann. Die gelesenen Informationen werden mit den elektronisch gespeicherten Informationen verglichen:

Ist kein Strichcode vorhanden oder ist der Strichcode unlesbar, so dass überhaupt keine Information gewonnen werden kann, die mit der gespeicherten Information verglichen werden könnte, wird die Küvette nicht für die Durchführung einer Messung akzeptiert und über einen ersten Transportweg in ein Abfallbehältnis überführt.

Ist ein lesbarer Strichcode vorhanden, aber die gelesene Chargennummer ist nicht als akzeptable Chargennummer im Gerät gespeichert, wird die Küvette nicht für die Durchführung einer Messung akzeptiert und über einen ersten Transportweg in ein Abfallbehältnis überführt. Gleichermaßen wird verfahren, wenn die gelesene Verwendbarkeitsdauer der Küvette abgelaufen ist.

Ist die gelesene Chargennummer als akzeptable Chargennummer im Gerät gespeichert und ist zusätzlich die gelesene Verwendbarkeitsdauer der Küvette noch nicht abgelaufen, wird die Küvette für die Durchführung einer Messung akzeptiert und über einen zweiten Transportweg in eine nächste Position gebracht, in der ein Probenaliquot durch eine Pipettiervorrichtung in die Küvette gefüllt wird. Die Küvette wird nun entlang des zweiten Transportweges in eine nächste Position gebracht, in der eine bestimmte Menge Reagenz durch eine Pipettiervorrichtung in die Küvette gefüllt wird, wodurch die Probe mit dem

Reagenz vermischt wird. Nach der erforderlichen Reaktionszeit wird die Küvette weiter entlang des zweiten Transportweges in eine nächste Position gebracht, in der die Messung der Reaktion durchgeführt wird. Handelt es sich z. B. um eine optisch messbare Reaktion wird die Messung mit Hilfe eines Photometers durchgeführt. Nachdem die Messung der Reaktion beendet ist, wird die Küvette entlang des zweiten Transportweges in eine nächste Position gebracht, in der der Strichcode durch Zerkratzen mit einer metallischen Spitze zerstört und damit unlesbar gemacht wird. Das Zerkratzen erfolgt, indem die Küvette in einer Position arretiert wird, so dass ein horizontal beweglicher Arm, an dessen Ende eine metallische Spitze angebracht ist, mehrere Male über den oberen Rand der Küvette, auf den der Strichcode aufgebracht ist, kratzt. Anschließend wird die Küvette entlang des zweiten Transportweges in ein Abfallbehältnis überführt.

## Patentansprüche

1. Verfahren zur Verhinderung des mehrfachen Gebrauchs eines Einmalartikels in einem automatischen Analysegerät, wobei der Einmalartikel mit einer detektierbaren Markierung versehen ist, enthaltend folgende Verfahrensschritte:
a) Detektion der detektierbaren Markierung des Einmalartikels mittels einer Detektionsvorrichtung,
b) Vergleich des detektierten Signals mit gespeicherter Information,
c) Verwendung des Einmalartikels zu seinem Bestimmungszweck in dem automatischen Analysengerät, sofern in Schritt b) eine Übereinstimmung des detektierten Signals mit der gespeicherten Information festgestellt wurde, und
d) Unleserlichmachen der detektierbaren Markierung des Einmalartikels.

2. Verfahren nach Anspruch 1, wobei der Einmalartikel mit einer Strichcode-Markierung versehen ist und wobei in Schritt a) die Detektion der Strichcode-Markierung mittels eines optisch arbeitenden Datenerfassungsgerätes erfolgt.

3. Verfahren nach Anspruch 2, wobei in Schritt d) die Strichcode-Markierung durch Überstreichen mit einem abdeckenden Farbmittel unleserlich gemacht wird.

4. Verfahren nach Anspruch 2, wobei in Schritt d) die Strichcode-Markierung durch Zerkratzen mit einem scharfen Gegenstand unleserlich gemacht wird.

5. Verfahren nach Anspruch 1, wobei der Einmalartikel mit mindestens einem Farbstoff als detektierbarer Markierung versehen ist und wobei in Schritt a) die Detektion des Absorptions- oder Reflexionsspektrum mittels eines Photometers erfolgt.

6. Verfahren nach Anspruch 5, wobei der Einmalartikel an sich mit einem Farbstoff oder einer Kombination von Farbstoffen eingefärbt ist.

7. Verfahren nach Anspruch 5, wobei der Einmalartikel mit einem farbigen Klebetikett markiert ist.

8. Verfahren nach einem der Ansprüche 6 und 7, wobei in Schritt d) die Farbmarkierung durch Aufbringen eines abdeckenden Farbmittels unleserlich gemacht wird.

9. Verfahren nach Anspruch 7, wobei in Schritt d) das farbige Klebeetikett durch Zerkratzen mit einem scharfen Gegenstand unleserlich gemacht wird.

10. Verfahren nach Anspruch 1, wobei der Einmalartikel mit einem Radiofrequenz-Transponder, der aus einem Mikrochip mit gespeicherter Information und einer Antenne besteht, als detektierbarer Markierung versehen ist und wobei in Schritt a) die Detektion der gespeicherten Information, die über die Antenne als Radiostrahlung abgestrahlt wird, mittels eines Lesegeräts durch induktive oder kapazitive Kopplung erfolgt.

11. Verfahren nach Anspruch 10, wobei in Schritt d) die auf einem Mikrochip gespeicherte Information durch mechanische Zerstörung der Antenne des Radiofrequenztransponders oder durch mechanische Abtrennung der Antenne vom Mikrochip unleserlich gemacht wird.

12. Gerät zur automatischen Durchführung eines Verfahrens zur qualitativen oder quantitativen Bestimmung eines Analyten, **dadurch gekennzeichnet, dass** es
i) eine Vorrichtung zur Detektion einer detektierbaren Markierung eines Einmalartikels und
ii) eine Vorrichtung zum Ändern, Entfernen oder Zerstören der detektierbaren Markierung des Einmalartikels enthält.
